# EUROPEAN PATENT SPECIFICATION

(11) **EP 2 178 955 B1**
(45) Date of publication and mention of the grant of the patent: **09.11.2011**
(21) Application number: 08797281.6
(22) Date of filing: 06.08.2008
(51) Int. Cl.: C08J 9/00, C08K 5/521, C08K 5/523, C08K 5/5357, C08G 101/00

(54) **FLAME RETARDED RIGID POLYURETHANE FOAMS AND RIGID POLYURETHANE FOAM FORMULATIONS**
FLAMMHEMMENDE POLYURETHANHARTSCHAUMSTOFFE UND POLYURETHANHARTSCHAUMSTOFFFORMULIERUNGEN
MOUSSES DE POLYURÉTHANE RIGIDES IGNIFUGÉES ET FORMULATIONS DE MOUSSES DE POLYURÉTHANE RIGIDES

(30) Priority: 07.08.2007 US 954510 P
(43) Date of publication of application: 28.04.2010
(73) Proprietor: Albemarle Corporation, Baton Rouge, LA 70801 (US)
(72) Inventor: CHEW, Hoover, B., Prairieville, LA 70769 (US); JOSHI, Ravindra, R., Stevenson Ranch, California 91381 (US); MACK, Arthur, G., Prairieville, LA 70769 (US); IBAY, Augusto, Baton Rouge, LA 70816 (US)
(74) Representative: UEXKÜLL & STOLBERG
(86) International application number: PCT/US2008/072331
(87) International publication number: WO 2009/021035

(56) References cited:
- EP-A- 0 075 863
- US-A- 4 565 833

## Description

### FIELD OF THE INVENTION

The present invention relates to flame retarded rigid polyurethane foam formulations, flame retardant additives suitable for use therein, and flame retarded foams made therefrom.

### BACKGROUND OF THE INVENTION

Rigid polyurethane foam are most typically produced using a cast process or spray process. The cast process is generally utilized for block foam production, continuous double band lamination ("DBL"), and discontinuous panel production ("DCP"), and block foam is typically produced by known discontinuous production or continuous rigid slab-stock production methods. If necessary for specialty products, the block foam is cut after production to the required shape, and is typically glued to facings to make the finished specially product. Such products find use in, for example, the building industry, in truck insulation, and in the form of "half shells" for pipe insulation.

Double band lamination is a continuous panel production process with both sides of the panel laminated with flexible or rigid facing materials. The polyurethane foam core is sandwiched between those facings and applied as insulation for floors, walls and roofs. Sandwich panels with a rigid metal facing are structural building elements and can be applied as roof and wall construction elements such as cold-store panels, garage doors, refrigerated trucks, and for similar uses. Sandwich panels with non-metal rigid facing, e.g., gypsum board or wood, are used in the manufacture of prefabricated houses or other building structures.

Because of the widespread use of rigid polyurethane foams, much research has been done on providing flame retardancy to polyurethane/polyisocyanurate foams. To this end, a myriad of flame retardants have been used and proposed to provide flame retardant properties to rigid polyurethane foams. For example, example 1 of US-A-4 565 833 discloses a flame retardant composition used in PUR rigid foams, prepared from 10 parts of dimethyl methyl phosphonate (DMMP) and 90 parts of isopropylated triphenyl phosphate. However, even with the available flame retardants the industry has increasingly requested flame retardants that outperform or have more favorable characteristics than those currently available.

### SUMMARY OF THE INVENTION

The present invention relates to a flame retardant additive comprising: a) at least one, in some embodiments only one, phosphorous-containing flame retardant; and b) at least one, in some embodiments only one, alkylated triaryl phosphate ester, preferably isopropylphenyl diphenyl phosphate, wherein a) is present in an amount of less than 30wt.%, based on the total weight of the flame retardant additive and b) is present in an amount of greater than 70 wt.%, based on the total weight of the flame retardant additive:

The present invention also relates to a rigid polyurethane foam formulation comprising a) at least one, in some embodiments only one, phosphorous-containing flame retardant; and b) at least one, in some embodiments only one, alkylated triaryl phosphate ester, preferably isopropylphenyl diphenyl phosphate; c) at least one, in some embodiments only one, i) isocyanate; ii) polyol, or combinations of i) and ii); and d) at least one, in some embodiments only one, blowing agent, wherein a) is present in an amount of less than 30wt.%, based on the total weight of a) and b), and b) is present in an amount of greater than 70 wt.%, based on the total weight of a) and b).

The present invention also relates to a process for forming a rigid flame retarded polyurethane foam comprising combining or bringing together a) at least one, in some embodiments only one, phosphorous-containing flame retardant; and b) at least one, in some embodiments only one, alkylated triaryl phosphate ester, preferably isopropylphenyl diphenyl phosphate; c) at least one, in some embodiments only one, i) isocyanate; ii) polyol, or combinations of i) and ii); and d) at least one, in some embodiments only one, blowing agent, in the presence of at least one, in some embodiments only one, catalyst, wherein a) is present in an amount of less than 30wt.%, based on the total weight of a) and b), and b) is present in an amount of greater than 70 wt.%, based on the total weight of a) and b), and wherein the flame retarded polyurethane/polyisocyanurate foam thus formed meets or exceeds the requirements of California Technical Bulletin 117 part A and D.

### DETAILED DESCRIPTION OF THE INVENVTION

The inventors hereof have discovered that the use of the flame retardant additives described herein, can provide rigid flame retarded polyurethane foams that meet or exceeds the requirements of California Technical Bulletin 117 part A and D.

### Flame Retardant Additive

The flame retardant additives of the present invention comprise a) at least one, in some embodiments only one, phosphorous-containing flame retardant; and b) at least one, in some embodiments only one, alkylated triaryl phosphate ester.

Generally, the flame retardant additives of the present invention contain less than 30 wt.%, typically in the range of from 1 to 30wt.%, of a) and greater than 70wt.%, typically in the range of from 70 to 99wt.%, of b), all based on the total weight of the flame retardant additive. In some embodiments, the flame retardant additives of the present invention contain in the range of from 5 to 30wt.% of a) and in the range of from 70 to 95wt.% of b). In an exemplary embodiment, the flame retardant additives of the present invention contain in the range of from 5 to 15wt.% of a) and in the range of from 85 to 95wt.% of b).

The flame retardant additives of the present invention can be characterized as having a phosphorus content in the range of from 5 to 15 wt.%, based on the total weight of the flame retardant additive. In some embodiments, the flame retardant additives of the present invention can be characterized as having a phosphorus content in the range of from 8 to 15 wt.%, preferably in the range of from 8 to 12 wt.%, both on the same basis.

The flame retardant additives of the present invention can also be characterized as having a viscosity at 25°C, in the range of from 100 to 2000 cP. In some embodiments, the flame retardant additives of the present invention can be characterized as having a viscosity in the range of from 100 to 1000 cP, preferably in the range of from 400 to 600 cP. The low viscosity of the present flame retardant additives make the especially effective in rigid foam formulations because the low viscosity allows for better dispersion in the rigid foam formulations, thus allowing for more effective foams. For example, a poorly dispersed flame retardant could negatively effect the mechanical properties of the foam, as is well-known in the art.

The inventors hereof have unexpectedly discovered that by utilizing levels of a) as low as described above, flame retarded rigid polyurethane foams that meet or exceeds the requirements of California Technical Bulletin 117 part A and D can be provided. This is a desirable quality because phosphorous-containing flame retardants currently used in polyurethane, which can be used in some embodiments of the present invention, are considered chemical weapons precursors, thus their shipping, use, etc., and distribution could prove problematic and expensive. However, the inventors hereof have discovered that phosphorous-containing flame retardant levels within the above described ranges, in some embodiments in the range of from 5 to 15wt.%, alleviates some of the problems associated with having a component of the flame retardant additive considered a chemical weapons precursor. While heretofore levels within this range were not contemplated, the inventors hereof have unexpectedly discovered that phosphorous-containing flame retardant levels within these ranges can still provide for flame retarded polyurethane/polyisocyanurate foams that meet or exceeds the requirements of California Technical Bulletin 117 part A and D.

### Component a)

The phosphorous-containing flame retardant used herein can be selected from any phosphorous flame retardant, preferably those phosphorous flame retardants having a phosphorous content, as determined by P-NMR or ICP, in the range of from 10 to 30wt.%, preferably in the range of from 15 to 25wt.%, more preferably in the range of from 18 to 21 wt.%, all based on the total weight of the phosphorous flame retardant. In some embodiments, the phosphorous-containing flame retardant is a phosphate, in other embodiments a phosphite, and in stiii other embodiments, a phosphonate. The phosphorus-containing flame retardant can be cyclic or linear, preferably cyclic. In an exemplary embodiment, the phosphorous-containing flame retardant used herein is a cyclic phosphonate. In some embodiments, the cyclic phosphonate contains at least dimers and monomers, typically in the range of from 50 to 70 wt.% monomer and in the range of from 15 to 25 wt.% dimer, both based on the total weight of the cyclic phosphonate. In these embodiments, the remainder of the cyclic phosphonate is typically trimers, etc. that have a higher molecular weight than the dimers. In preferred embodiments, the monomers are CAS registration number 41203-81-0, and the dimers are CAS registration number 42595-45-9.

### Component b)

The alkylated triaryl phosphate ester used herein can be selected from any alkylated triaryl phosphate ester. In preferred embodiments, the alkylated triaryl phosphate ester used herein is a mixture of isopropylated triphenyl phosphate esters. The alkylated triaryl phosphate ester can comprise in the range of from 20 to 50wt.%, based on the total weight of the alkylated triaryl phosphate ester, isopropylphenyldiphenylphosphate, preferably in the range of from 20 to 40wt.%, more preferably in the range of from 30 to 40wt.%, on the same basis. The mixture alkylated triaryl phosphate ester can comprise in the range of from 20 to 40wt.%, based on the total weight of the alkylated triaryl phosphate ester, di(isopropylphenyl) phenylphosphate, preferably in the range of from 20 to 35wt.%, more preferably in the range of from 20 to 30wt.%, on the same basis. The alkylated triaryl phosphate ester can comprise in the range of from 1 to 15wt.%, based on the total weight of the alkylated triaryl phosphate ester, tri(isopropylphenyl)phosphate, preferably in the range of from 5 to 15wt.%, on the same basis. The alkylated triaryl phosphate ester used herein can comprise in the range of from 0 to 50wt.%, triphenyl phosphate, based on the total weight of the alkylated triaryl phosphate ester, preferably, in the range of from 10 to 50wt.%, more preferably in the range of from 20 to 40wt.%, triphenyl phosphate, most preferably in the range of from 20 to 35wt.%, triphenyl phosphate, all on the same basis. In an exemplary embodiment, the alkylated triaryl phosphate ester is a mixture of isopropylated triphenyl phosphate esters comprising at least two of, preferably at least three of, more preferably all of: i) isopropylphenyldiphenylphosphate; ii) di(isopropylphenyl)phenylphosphate; iii) tri(isopropylphenyl)phosphate; and iv) triphenyl phosphate. In this particular embodiment, the amount of i) isopropylphenyldiphenylphosphate; ii) di(isopropylphenyl)phenylphosphate; iii) tri(isopropylphenyl)phosphate; and iv) triphenyl phosphate in the mixture of isopropylated triphenyl phosphate esters is as described in this paragraph, including preferred embodiments, e.g., for i) isopropylphenyldiphenylphosphate, in the range of from 20 to 50wt.%, based on the total weight of the alkylated triaryl phosphate ester, isopropylphenyldiphenylphosphate, preferably in the range of from 20 to 40wt.%, etc..

### Use as a Flame Retardant.

The flame retardant additives of the present invention are useful in providing flame retardancy to rigid polyurethane foams. Typically, the flame retardant additives will be included as one of various additives employed in the polyurethane foam formation process and will be employed using typical polyurethane foam formation conditions. Anyone unfamiliar with the art of forming polyurethanes or polyurethane foams may refer to, for example United States Patent Numbers 3,954,684; 4,209,609; 5,356,943; 5,563,180; and 6,121,338, and the references cited therein.

Thus, in some embodiments, the present invention relates to a rigid polyurethane foam formulation comprising a flame retardant additive according to the present invention, typically a flame retarding amount of a flame retardant additive according to the present invention; at least one, in some embodiments only one, isocyanate, polyol or combination thereof; and at least one, in some embodiments only one, blowing agent, and rigid polyurethane foams formed therefrom. Blowing agents suitable for use herein include water, a volatile hydrocarbon, halocarbon, or halohydrocarbon, or mixtures of two or more such materials.

By a flame retarding amount of the flame retardant additives of the present invention, it is meant that amount sufficient to meet or exceed the test standards set forth in California Technical Bulletin 117 part A and D. Generally, this is in the range of from about 5 to about 25 phr of the flame retardant additive, fn preferred embodiments, a flame retarding amount is to be considered in the range of from 5 to 20 phr, more preferably in the range of from 5 to 15 phr, most preferably in the range of from 10 to 15 phr of the flame retardant additive.

The isocyanate used in the present invention can be selected from any of those known in the art to be effective in producing rigid polyurethane foams. Thus, organic polyisocyanates which may be employed include aromatic, aliphatic, and cycloaliphatic polyisocyanates and combinations thereof. Representative of these types are the diisocyanates such as m-phenylene diisocyanate, 2,4-toluene diisocyanate, 2,6-toluene diisocyanate, mixtures of 2,4- and 2,6-toluene diisocyanate, hexamethylene diisocyanate, tetramethylene diisocyanate, cyclohexane-1,4-diisocyanate, hexahydrotoluene diisocyanate (and isomers), naphthalene- 1,5-diisocyanate, 1-methoxyphenyl-2,4-diisocyanate, 4,4'-diphenyl methane diisocyanate, 4,4'-biphenylene diisocyanate, 3,3'-dimethoxy-4,4'-biphenyl diisocyanate, 3,3'-dimethyl-4,4'-biphenyl diisocyanate and 3,3'-dimethyldiphenylmethane-4,4'-diisocyanate; the triisocyanates such as 4,4',4"-triphenylmethane triisocyanate, and toluene 2,4,6-triisocyanate; and the tetraisocyanates such as 4,4'-dimethyldiphenylmethane-2,2',5,5'-tetraisocyanate and polymeric polyisocyanates such as polymethylene polyphenylene polyisocyanate. Especially useful due to its availability and properties is toluene diisocyanate.

Polyols suitable for use herein can be selected from any polyols known in the art to be effective at producing rigid polyurethane foams, in preferred embodiments a polyester polyol. Thus individual or mixtures of polyols with hydroxyl values in the range of from 150 to 850 mg KOH/g, and preferably in the range of from 200 to 600 mg KOH/g, and hydroxyl functionalities in the range of from 2 to 8 and preferably in the range of from 3 to 8 are used. Suitable polyols meeting these criteria have been fully described in the literature, and include reaction products of (a) alkylene oxide such as propylene oxide and/or ethylene oxide, with (b) initiators having in the range of from 2 to 8 active hydrogen atoms per molecule. Suitable initiators include, for example, diols (e.g., diethylene glycol, bisphenol-A), polyesters (e.g., polyethylene terephthalate), triols (e.g., glycerine), novolac resins, ethylenediamine, pentaerythritol, sorbitol, and sucrose. Other usable polyols include polyesters prepared by the condensation reaction of appropriate proportions of glycols and higher functionality polyols with dicarboxylic or polycarboxylic acids. The polyether polyols can be mixed with polyester types. Other polyols include hydroxyl-terminated polythioethers, polyamides, polyesteramides, polycarbonates, polyacetals and polysiloxanes.

In addition to these components, the rigid polyurethane foam formulations can contain any other component known in the art and used in the formation of rigid polyurethane foams. These other components are well known to those of ordinary skill in the art. For example, the rigid polyurethane foam formulations can contain *i)* surfactants, *ii)* antioxidants, *iii)* diluents, *iv)* chain extenders or cross linkers, *v)* synergists, preferably melamine; and *vi)* plasticizers. These optional components are well known in the art and the amount of these optional components is conventional and not critical to the instant invention. For example, non-limiting examples of diluents such as low viscosity liquid C₁₋₄ halocarbon and/or halohydrocarbon diluents in which the halogen content is 1-4 bromine and/or chlorine atoms can also be included in the compositions of this invention. Non-limiting examples of such diluents include bromochloromethane, methylene chloride, ethylene dichloride, ethylene dibromide, isopropyl chloride, n-butyl bromide, sec-butyl bromide, n-butyl chloride, sec-butyl chloride, chloroform, perchloroethylene, methyl chloroform, and carbon tetrachloride.

It should be noted that these and other ingredients that can be used in the polyurethane/polyisocyanurate foam formulations of the present invention, and the proportions and manner in which they are used are reported in the literature.

In the practice of the present invention, the rigid polyurethane foam formulations can be combined with a catalyst, or the individual components combined in the presence of a catalyst, to form a flame retarded rigid polyurethane foam that meets or exceeds the test standards set forth in California Technical Bulletin 117 part A and D. Non-limiting examples of catalysts suitable for use in forming the rigid polyurethane foams include gel catalysts, blow catalysts, balanced gel/blow catalysts, trimerization catalysts, and the like.

The above description is directed to several embodiments of the present invention. Those skilled in the art will recognize that other means, which are equally effective, could be devised for carrying out the spirit of this invention. It should also be noted that preferred embodiments of the present invention contemplate that all ranges discussed herein include ranges from any lower amount to any higher amount.

The following examples will illustrate the present invention, but are not meant to be limiting in any manner.

### EXAMPLES

In order to prove the effectiveness of a flame retardant according to the present invention, foams were prepared with and without a flame retardant according to the present invention. The flame retardant used in these examples was a mixture of 10wt.% of a commercially available cyclic phosphonate flame retardant sold under the tradename Amgard CU, and 90wt.% isopropyl diphenyl phosphate ester.

Foam Preparation: The polyols, flame retardant, cyclopentane, silicone surfactant, dimethylcyclohexylamine, and water were weighed into a one-gallon-sized jar in the amounts indicated in the Table, which was then capped, shaken, and rolled for at least one hour to obtain a homogeneous blend. A portion of this blend and the required amount of polymeric MDI based on the amount of the blend were then weighed into a one-gallon "chicken bucket." The contents of the cup were then mixed at 2000 rpm using a bow-tie agitator for 20 seconds and immediately poured into a polyethylene sheet-lined mold. The mold was closed and foam was allowed to rise in the mold. Meanwhile, the reactivity profile was obtained from the remaining material in the chicken bucket. For this system, the typical reactivity profile was 35 sec for creme time, 1 min 5 sec for gel time, 1 min 35 sec for tack free time, and 2 min 5 sec for free rise time.

**Table: Comparison of Rigid Polyurethane Pour Foam with and without a flame retardant according to the present invention.**

| | According to the Present Invention | Comparative |
|---|---|---|
| Polyester Polyol (OH=307) (Terate 4020 from Invista) | 36.00% | 67.00% |
| Polyether polyol (OH=490) (Voranol 490 from Dow) | 16.20% | 20.20% |
| Flame Retardant | 35.00% | - |
| Cyclopentane (Exxsol 2000 from Exxon) | 10.00% | 10.00% |
| Silicone Surfactant (Pelsil 9900 from Pelron) | 1.00% | 1.00% |
| DMCHA (Polycat 8 from Air Products) | 0.50% | 0.50% |
| Water | 1.30% | 1.30% |
| Polymeric MDI (31.4% NCO) Index (PAPI-27 from Dow) | 110 | 110 |
| A/B wt. Ratio | 0.71 | 1.01 |
| **PROPERTIES** | | |
| Density (lb/in³) | 2.37 | 2.01 |
| Flame Spread Index* | 33.4 | 49.7 |
| Smoke Index* | 286 | 354 |

| | | |
|---|---|---|
| *Predicted ASTM E-84 values based on Cone Calorimeter results. DMCHA=dimethylcyclohexylamine | | |

## Claims

1. A rigid polyurethane foam derived from at least one isocyanate, polyol, or mixture thereof; at least one blowing agent; and a flame retardant additive wherein said flame retardant additive contains:
a) at least one cyclic phosphonate flame retardant;
b) at least one alkylated triaryl phosphate ester, and optionally
c) one or more *i)* surfactants, *ii)* antioxidants, *iii)* diluents, *iv)* chain extenders or cross linkers, *v)* synergists; and *vi)* plasticizers,
wherein a) is present in an amount of less than 30 wt.%, based on the total weight of a) and b), and b) is present in an amount of greater than 70 wt.%, based on the total weight of a) and b), and wherein the rigid polyurethane foam meets or exceeds the requirements of California Technical Bulletin 117 part A and D.

2. The rigid polyurethane foam according to claim 1 wherein the cyclic phosphonate contains in the range of from 50 to 70 wt.% monomer and in the range of from 15 to 25 wt.% dimer, both based on the total weight of the cyclic phosphonate.

3. The rigid polyurethane foam according to any of claims 1 or 2 wherein the alkylated triaryl phosphate ester is a mixture of isopropylated triphenyl phosphate esters comprising at least one of: i) isopropylphenyldiphenylphosphate; ii) di(isopropylphenyl)phenylphosphate; iii) tri(isopropylphenyl)phosphate; and iv) triphenyl phosphate.

4. The rigid polyurethane foam according to claim 2 wherein the monomers are CAS registration number 41203-81-0, and the dimers are CAS registration number 42595-45-9.

5. The rigid polyurethane foam according to any of claims 1 or 4 wherein i) a) is present in an amount in the range of from 5 to 30 wt.% and b) is present in an amount in the range of from 70 to 95 wt.%; or ii) a) is present in an amount in the range of from 5 to 15 wt.% and b) is present in an amount in the range of from 85 to 95 wt.%, all based on the total weight of a) and b).

6. A process for forming a flame retarded polyurethane or polyisocyanurate foam according to claim 1 comprising combining or bringing together:
a) at least one cyclic phosphonate flame retardant;
b) at least one, alkylated triaryl phosphate ester;
c) at least one isocyanate, polyol, or mixture thereof;
d) at least one blowing agent; and
optionally
e) one or more *i)* surfactants, *ii)* antioxidants, *iii)* diluents, *iv)* chain extenders or cross linkers, *v)* synergists; and *vi)* plasticizers,
wherein a) is present in an amount of less than 30wt.%, based on the total weight of a) and b), and b) is present in an amount of greater than 70 wt.%, based on the total weight of a) and b); the rigid polyurethane foam meets or exceeds the requirements of California Technical Bulletin 117 part A and D, and a) - d), and optionally e), are combined in the presence of at least one catalyst.

7. The process according to claim 6 wherein the cyclic phosphonate contains in the range of from 50 to 70 wt.% monomer and in the range of from 15 to 25 wt.% dimer, both based on the total weight of the cyclic phosphonate.

8. The process according to any of claims 6 or 7 wherein the alkylated triaryl phosphate ester is a mixture of isopropylated triphenyl phosphate esters comprising at least one of: i) isopropylphenyldiphenylphosphate; ii) di(isopropylphenyl)phenylphosphate; iii) tri(isopropylphenyl)phosphate; and iv) triphenyl phosphate.

9. The process according to claim 7 wherein the monomers are CAS registration number 41203-81-0, and the dimers are CAS registration number 42595-45-9.

10. The process according to any of claims 6 or 9 wherein i) a) is present in an amount in the range of from 5 to 30 wt.% and b) a) is present in an amount in the range of from 70 to 95 wt.% of b); or ii) a) is present in an amount in the range of from 5 to 15 wt.% and b) is present in an amount in the range of from 85 to 95 wt.%, all based on the total weight of a) and b).

11. The process according to claim 8 wherein the amount of said at least one of i)-iv) in said mixture of isopropylated triphenyl phosphate esters is: i) in the range of from 20 to 50 wt.%, isopropylphenyldiphenylphosphate; ii) in the range of from 20 to 40 wit.%, based on the total weight of the alkylated triaryl, phosphate ester, di(isopropylphenyl)phenylphosphate; iii) in the range of from 1 to 15 wt.%, tri(isopropylphenyl)-phosphate, iv) in the range of from 0 to 50 wt.%, triphenyl phosphate, all based on the total weight of the mixture of isopropylated triphenyl phosphate esters.

12. The process according to claim 6 wherein a) is present in an amount in the range of from 5 to 25 phr.

13. A molded or extruded article made from the flame retarded polyurethane foam according to claim 6.

## Patentansprüche

1. Polyurethanhartschaum, der sich von mindestens einem Isocyanat, Polyol oder einer Mischung derselben, mindestens einem Treibmittel und einem Flammschutzadditiv ableitet, wobei das Flammschutzadditiv:
a) mindestens ein cyclisches Phosphonat-Flammschutzmittel,
b) mindestens einen alkylierten Triarylphosphatester, und gegebenenfalls
c) ein oder mehrere i) Tenside, ii) Antioxidantien, iii) Verdünnungsmittel, iv) Kettenverlängerer oder Vernetzer, v) Synergisten und vi) Weichmacher enthält,
wobei a) in einer Menge von weniger als 30 Gew.-% vorhanden ist, bezogen auf das Gesamtgewicht von a) und b), und b) in einer Menge von mehr als 70 Gew.-% vorhanden ist, bezogen auf das Gesamtgewicht von a) und b), und der Polyurethanhartschaum die Anforderungen von California Technical Bulletin 117 Teil A und D erfüllt oder übertrifft.

2. Polyurethanhartschaum nach Anspruch 1, bei dem das cyclische Phosphonat 50 bis 70 Ges.-% Monomer und 15 bis 25 Gew.-% Dimer enthält, beides bezogen auf das Gesamtgewicht des cyclischen Phosphonats.

3. Polyurethanhartschaum nach einem der Ansprüche 1 oder 2, bei dem der alkylierte Triarylphosphatester eine Mischung von isopropylierten Triphenylphosphatestern ist, die mindestens eines von: i) Isopropylphenyldiphenylphosphat, ii) Di(isopropylphenyl)phenylphosphat, iii) Tri(isopropylphenyl)phosphat und iv) Triphenylphosphat umfasst.

4. Polyurethanhartschaum nach Anspruch 2, bei dem die Monomere die CAS Registrierungsnummern 41203-81-0 aufweisen und die Dimere die CAS Registrierungsnummer 42595-45-9 aufweisen.

5. Polyurethanhartschaum nach einem der Ansprüche 1 oder 4, bei dem i) a) in einer Menge von 5 bis 30 Gew.-% vorhanden ist, b) in einer Menge von 70 bis 95 Gew.-% vorhanden ist, oder ii) a) in einer Menge von 5 bis 15 Ges.-% vorhanden ist und b) in einer Menge von 85 bis 95 Gew.-% vorhanden ist, alles bezogen auf das Gesamtgewicht von a) und b).

6. Verfahren zur Bildung eines flammgeschützten Polyurethan- oder Polyisocyanatschaums gemäß Anspruch 1, bei dem
a) mindestens ein cyclisches Phosphonat-Flammschutzmittel,
b) mindestens ein alkylierter Triarylphosphatester,
c) mindestens ein Isocyanat, Polyol oder eine Mischung derselben,
d) mindestens ein Treibmittel, und gegebenenfalls
e) ein oder mehrere i) Tenside, ii) Antioxidantien, iii) Verdünnungsmittel, iv) Kettenverlängerer oder Vernetzer, v) Synergisten und vi) Weichmacher
miteinander kombiniert oder zusammengebracht werden,
wobei a) in einer Menge von weniger als 30 Gew.-% vorhanden ist, bezogen auf das Gesamtgewicht von a) und b), und b) in einer Menge von mehr als 70 Ges.-% vorhanden ist, bezogen auf das Gesamtgewicht von a) und b), der Polyurethanhartschaum die Anforderungen von California Technical Bulletin 117 Teil A und D erfüllt oder übertrifft, und a) bis d) und gegebenenfalls e) in Gegenwart mindestens eines Katalysators kombiniert werden.

7. Verfahren nach Anspruch 6, bei dem das cyclische Phosphonat 50 bis 70 Ges.-% Monomer und 15 bis 25 Gew.-% Dimer enthält, beides bezogen auf das Gesamtgewicht des cyclischen Phosphonats.

8. Verfahren nach einem der Ansprüche 6 oder 7; bei dem der alkylierte Triarylphosphatester eine Mischung von isopropylierten Triphenylphosphatestern ist, die mindestens eines von: i) Isopropylphenyldiphenylphosphat, ii) Di(isopropylphenyl)phenylphosphat, iii) Tri(isopropylphenyl)-phosphat und iv) Triphenylphosphat umfasst.

9. Verfahren nach Anspruch 7, bei dem die Monomere die CAS Registrierungsnummer 41203-81-0 aufweisen und die Dimere die CAS Registrierungsnummer 42595-45-9 aufweisen.

10. Verfahren nach einem der Ansprüche 6 oder 9, bei dem i) a) in einer Menge von 5 bis 30 Gew.-% vorhanden ist und b) in einer Menge von 70 bis 95 Gew.-% vorhanden ist, oder ii) a) in einer Menge von 5 bis 15 Gew.-% vorhanden ist und b) in einer Menge von 85 bis 95 Gew.-% vorhanden ist, alles bezogen auf das Gesamtgewicht von a) und b).

11. Verfahren nach Anspruch 8, bei dem die Menge von dem mindestens einem von i) bis iv) in der Mischung von isopropylierten Triphenylphosphatestern ist: i) 20 bis 50 Gew.-% Isopropylphenyldiphenylphosphat, ii) 20 bis 40 Gewichtsprozent Di(isopropylphenyl)phenylphosphat, bezogen auf das Gesamtgewicht des alkylierten Triarylphosphatesters, iii) 1 bis 15 Gew.-% Tri(isopropylphenyl)phosphat, iv) 0 bis 50 Gew.-% Triphenylphosphat, alles bezogen auf das Gesamtgewicht der Mischung von isopropylierten Triphenylphosphatestern.

12. Verfahren nach Anspruch 6, bei dem a) in einer Menge von 5 bis 25 phr vorhanden ist.

13. Geformter oder extrudierter Gegenstand hergestellt aus dem flammgeschützten Polyurethanschaum gemäß Anspruch 6.

## Revendications

1. Mousse de polyuréthane rigide dérivée à partir d'au moins un isocyanate, polyol, ou un mélange de ces derniers ; au moins un agent d'expansion ; et un additif retardateur de flamme lequel additif retardateur de flamme contient :
a) au moins un retardateur de flamme phosphonate cyclique;
b) au moins un triaryl phosphate ester alkylé, et éventuellement
c) un ou plusieurs i) tensioactifs, ii) antioxydants, iii) diluants, iv) agents extenseurs de chaîne ou de réticulation, v) agents synergiques ; et vi) plastifiants,
où a) est présent dans une quantité de moins de 30 % en poids, par rapport à la masse totale de a) et b), et b) est présent dans une quantité supérieure à 70 % en poids, par rapport à la masse totale de a) et b), et où la mousse de polyuréthane rigide satisfait ou dépasse les exigences des parties A et D du California Technical Bulletin 117.

2. Mousse de polyuréthane rigide selon la revendication 1, dans laquelle le phosphonate cyclique contient dans le domaine de 50 % à 70 % en poids de monomère et dans le domaine de 15 % à 25 % en poids de dimère, tous les deux par rapport à la masse totale du phosphonate cyclique.

3. Mousse de polyuréthane rigide selon l'une quelconque des revendications 1 ou 2, dans laquelle le triaryl phosphate ester alkylé est un mélange de triphényl phosphate esters isopropylés comprenant au moins l'un parmi : i) l'isopropylphényldiphényl phosphate; ii) le di(isopropylphényl)phénylphosphate; iii) le tri(isopropylphényl) phosphate; et iv) le triphényl phosphate.

4. Mousse de polyuréthane rigide selon la revendication 2, dans lequel les monomères ont le numéro d'enregistrement CAS 41203-81-0, et les dimères ont le numéro d'enregistrement CAS 42595-45-9.

5. Mousse de polyuréthane rigide selon l'une quelconque des revendications 1 ou 4 dans laquelle i) a) est présent dans une quantité dans le domaine de 5 % à 30 % en poids et b) est présent dans une quantité dans le domaine de 70 % à 95 % en poids ; ou ii) a) est présent dans une quantité dans le domaine de 5 % à 15 % en poids et b) est présent dans une quantité dans le domaine de 85 % à 95 % en poids , par rapport à la masse totale de a) et b).

6. Procédé de formation d'une mousse de polyuréthane ou polyisocyanurate retardatrice de flamme selon la revendication 1 consistant à combiner et à mettre ensemble:
a) au moins un retardateur de flamme phosphonate cyclique ;
b) au moins un triaryl phosphate ester alkylé ;
c) au moins un isocyanate, polyol, ou un mélange de ces derniers ;
d) au moins un agent d'expansion ; et éventuellement
e) un ou plusieurs i) tensioactifs, ii) antioxydants, iii) diluants, iv) agents extenseurs de chaîne ou de réticulation, v) agents synergiques ; et vi) plastifiants,
où a) est présent dans une quantité inférieure à 30 % en poids, par rapport à la masse totale de a) et b), et b) est présent dans une quantité supérieure à 70 % en poids, par rapport à la masse totale de a) et b) ; la mousse de polyuréthane rigide satisfait ou dépasse les exigences des parties A et D du California Technical Bulletin 117, et a) à d), et éventuellement e), sont combinés en présence d'au moins un catalyseur.

7. Procédé selon la revendication 6, dans lequel le phosphonate cyclique contient dans le domaine de 50 % à 70 % en poids de monomère et dans le domaine de 15 % à 25 % en poids de dimère, tous les deux par rapport à la masse totale du phosphonate cyclique.

8. Procédé selon l'une quelconque des revendications 6 ou 7, dans lequel le triaryl phosphate ester alkylé est un mélange de triphényl phosphate esters isopropylés comprenant au moins l'un parmi : i) l'isopropylphényldiphényl phosphate; ii) le di(isopropylphényl)phénylphosphate; iii) le tri(isopropylphényl) phosphate; et iv) le triphényl phosphate.

9. Procédé selon la revendication 7, dans lequel les monomères ont le numéro d'enregistrement CAS 41203-81-0, et les dimères ont le numéro d'enregistrement CAS 42595-45-9.

10. Procédé selon l'une quelconque des revendications 6 ou 9, dans lequel i) a) est présent dans une quantité dans le domaine de 5 % à 30 % en poids et b) a) est présent dans une quantité dans le domaine de 70 % à 95 % en poids de b) ; ou ii) a) est présent dans une quantité dans le domaine de 5 % à 15% en poids et b) est présent dans une quantité dans le domaine de 85 % à 95 % en poids , tous étant par rapport à la masse totale de a) et b).

11. Procédé selon la revendication 8, dans lequel la quantité dudit au moins un parmi i) à iv) dans ledit mélange de triphényl phosphate esters isopropylés est : i) dans le domaine de 20 % à 50 % en poids, pour l'isopropylphényldiphényl phosphate; ii) dans le domaine de 20 % à 40 % en poids, par rapport à la masse totale du triaryl phosphate ester alkylé, pour le di(isopropylphényl)phénylphosphate; iii) dans le domaine de 1 % à 15 % en poids, pour le tri(isopropylphényl) phosphate; iv) dans le domaine de 0 % à 50 % en poids, pour le triphényl phosphate, tous étant par rapport à la masse totale du mélange de triphényl phosphate esters isopropylés.

12. Procédé selon la revendication 6, dans lequel a) est présent dans une quantité dans le domaine de 5 à 25 phr.

13. Article moulé ou extrudé préparé à partir de la mousse de polyuréthane retardatrice de flamme selon la revendication 6.
